Europäisches Patentamt

European Patent Office

Office européen des brevets

(11) Publication number: **0 202 615**
**A1**

# EUROPEAN PATENT APPLICATION

(21) Application number: **86106651.2**

(22) Date of filing: **15.05.86**

(51) Int. Cl.⁴: **C 08 L 35/06**
**C 08 L 25/08, C 08 L 51/04**

(30) Priority: **17.05.85 JP 104995/85**

(43) Date of publication of application:
**26.11.86 Bulletin 86/48**

(84) Designated Contracting States:
**BE DE FR GB**

(71) Applicant: **MITSUBISHI MONSANTO CHEMICAL COMPANY**
**5-2, Marunouchi 2-chome Chiyoda-ku Tokyo(JP)**

(72) Inventor: **Tomono, Hiromi**
**No. 1400 Oaza-Matsumoto Yokkaichi-shi Mie-ken(JP)**

(72) Inventor: **Aoki, Yuji**
**2-24, Akatsukidai 1-chome Yokkaichi-shi Mie-ken(JP)**

(72) Inventor: **Hatano, Akira**
**176-7, Minamigomizuka Kusu-cho Mie-gun Mie-ken(JP)**

(74) Representative: **Wächtershäuser, Günter, Dr.**
**Tal 29**
**D-8000 München 2(DE)**

(54) Thermoplastic resin composition having heat and impact resistant properties.

(57) A thermoplastic resin composition having heat resistant and impact resistant properties, in particular, excellent practical impact strength, which is a blend of 100 parts by weight of a composition consisting of 10 to 90% by weight of the below-mentioned components (A), 80 to 2% by weight of the below-mentioned component (B), to 70 to 1% by weight of the below-mentioned (C); and 1 to 20 parts by weight of a copolyether-ester type thermoplastic elastomer:

(A) a copolymer consisting of 90 to 50 mol % of a residual group of aromatic vinyl compound, 10 to 50 mol % of a residual group of maleimide compound, and 0 to 30 mol % of a residual group of a vinyl compound copolymerizable with the these two compounds;

(B) a copolymer consisting of 90 to 40 mol % of a residual group of aromatic vinyl compound, and 10 to 60 mol % of a residual group of at least one kind of acrylic compound selected from the group consisting of acrylonitrile, methacrylonitrile, alkylo ester of acrylic acid, and alkyl ester of methacrylic acid; and

(C) a graft copolymer having a number-average particle size of from 0.1 to 2 μm, the graft substrate of which is a rubber having a glass transition point of zero degree C or below, and the graft chain of which consists of 90 to 40 mol % of a residual group of aromatic vinyl compound and 10 to 60 mol % of a residual group of at least one kind of acrylic compound selected from the group consisting of acrylonitrile, methacrylonitrile, alkyl ester of acrylic acid, and alkyl ester of methacrylic acid.

EA-5479
MS0202615

- 1 -

## THERMOPLASTIC RESIN COMPOSITION HAVING HEAT AND IMPACT RESISTANT PROPERTIES

The present invention relates to a thermoplastic resin composition having excellent heat resistant as well as impact resistant properties, in particular, excellent practical impact resistant property.

A copolymer obtained by copolymerization of an aromatic vinyl compound, a maleimide compound, and, depending on necessity, a vinyl monomer capable of being copolymerized with these compounds has been known to have its properties such that it exhibits high Vicat softening point, i.e., heat resistance, and possesses high heat stability without being decomposed even at a high temperature condition (vide: Japanese Unexamined Patent Publication No. 98536/1982 and Japanese Unexamined Patent Publication No. 131213/1982).

Also, since a composition of the above-mentioned copolymer and ABS resin is excellent in its impact resistance to be indicated by Izod impact strength, etc. as well as in its heat resistance, it has a wide varieties of use in the fields of automobile industries and electrical industries, that is, interior finishing parts for automobiles such as, for example, a dash-board; a casing for electrical appliances; and so forth, which require both of the above-mentioned physical properties.

Further, a composition of the above-mentioned copolymer and a thermoplastic elastomer (as disclosed in Japanese Unexamined Patent Publication No. 49255/1984) is known to have its heat resistant property, hence it has been used for the same purpose as that of the above-mentioned composition.

This composition of the above-mentioned copolymer and the ABS resin, however, is not always satisfactory in its practical impact strength to be represented by the falling weight (dart) impact strength (FDI), in spite of its having the impact strength to be measured by the Izod impact test method (JIS K-710).

It has been known that increase in the mixing quantity of the rubber component, i.e., ABS resin is effective in improving the falling weight (dart) impact strength (FDI). In this case, however, there is a problem such that, with increase in the quantity of the rubber component, the heat resistance of the composition becomes low, accompanied by further decrease in its rigidity, fluidity, and other required properties.

Moreover, the above-mentioned composition of the copolymer and the thermoplastic elastomer is not sufficient for the purpose of manufacturing the interior finishing parts, etc. for the automobile, because its FDI could not attain its improvement to a satisfactory degree.

With a view to developing a resin composition having excellent practical impact strength, heat resistance, and shaping property, the present inventors strenuously conducted researches and experiments, as the result of which they have arrived at the present invention.

That is to say, the above-mentioned object of the present invention can be attained by the heat and impact resistant thermoplastic resin composition which consists essentially of: 100 parts by weight of a composition prepared by mixing the following components (A), (B) and (C) at their respective weight ratio of 10 to 90 wt.%, 80 to 2 wt.%, and 70 to 1 wt.%; and 1 to 20 parts by weight of a copolyether-ester type thermoplastic elastomer:

component (A) - a copolymer consisting of 90 to 50 mol % of a residual group of aromatic vinyl compound, 10 to 50 mol % of a residual group of maleimide compound, and 0 to 30 mol % of a residual group of a vinyl compound copolymerizable with these two compounds;

component (B) - a copolymer consisting of 90 to 40 mol % of a residual group of aromatic vinyl compound, and 10 to 60 mol % of a residual group of at least one kind of acrylic compound selected from the group consisting of acrylonitrile, methacrylonitrile, alkyl ester of acrylic acid, and alkyl ester of methacrylic acid; and

component (C) - a graft copolymer having a number-average particle size of from 0.1 to 2 μm, the graft substrate of which is a rubber having its glass transition point of zero degree C or below, and the graft chain of which consists of 90 to 40 mol % of a residual group of aromatic vinyl compound and 10 to 60 mol % of a residual group of at least one kind of acrylic compound selected from the group consisting of acrylonitrile, methacrylonitrile, alkyl ester of acrylic acid, and alkyl eater of methacrylic acid.

It should be noted incidentally that the content of each residual group is denoted, throughout this specification, by a percentage of the number of such residual group contained in each copolymer.

The copolymer of the component (A) should properly be composed of 90 to 50 mol %, or preferably 80 to 60 mol % of a residual group of an aromatic vinyl compound; 10 to 50 mol %, or preferably 20 to 40 mol % of a residual group of maleimide compound; and 0 to 30 mol % of a residual group of a vinyl compound copolymerizable with these two compounds. When the content of the residual group of the aromatic vinyl compound does not reach 50 mol %, its compatibility with other resins becomes low. On the other hand, when its content exceeds 90 mol %, the heat resistant property thereof decreases unfavorably.

The aromatic vinyl compound to be used for the purpose of the present invention may be selected from the following: styrene, tert-butyl styrene, α-methyl styrene,

o-methyl styrene, m-methyl styrene, p-methyl styrene, or a mixture of any of these compounds; halogenated styrene, α-vinyl naphthalene, β-vinyl naphthalene, or a mixture of any of these compounds.

The content of the residual group of the maleimide compound may be in a range of from 10 to 50 mol %, or preferably from 20 to 40 mol %. When its content is below 10 mol %, the heat resistant property of the resulting resin composition does not improve. On the other hand, when its content exceeds 50 mol %, its compatibility with other resins unfavorably decreases.

The maleimide compound to be used for the purpose of the present invention may be selected from the following: maleimide, N-aromatic maleimide, N-aliphatic maleimide, and others. As N-aromatic maleimide, there may be exemplified N-phenyl maleimide, N-tollyl maleimide, N-naphthyl maleimide, and so forth. As N-aliphatic maleimide, there may be exemplified N-alkyl maleimide having the alkyl group containing 1 to 10 carbon atoms. Of these maleimide compounds, N-aromatic maleimide is preferable from the point of its compatibility with other resins. It should also be noted that, from the standpoint of heat resistance and compatibility with other resins, a mixture of N-aromatic maleimide and another maleimide compound at a content less than N-aromatic maleimide is particularly preferable.

The copolymerizable vinyl compound may be selected from the following: acrylonitrile, methacrylonitrile, esters of acrylic acid (or methacrylic acid) and aliphatic alcohols having a carbon content of from 1 to 10, esters of maleic anhydride, maleic acid or fumaric acid and aliphatic alcohols having a carbon content of from 1 to 10. The content of such residual group of the vinyl compound should appropriately be in a range of 30 mol % or less from the standpoint of its heat resistance and compatibility with other resins.

The copolymer of the component (A) is obtained by copolymerization of each of the above-mentioned monomers, i.e., aromatic vinyl compound, maleimide compound, and, depending on necessity, vinyl compound copolymerizable with these two compounds through various polymerization methods such as bulk polymerization method, suspension polymerization method, bulk-suspension polymerization method, and so on.

The copolymer of the component (A) may also be obtained by imidizing a copolymer produced by the copolymerization of maleic anhydride, aromatic vinyl compound, and, depending on necessity, a vinyl compound copolymerizable with these compounds in the presence of corresponding primary amines such as ammonia, alkyl amine having the alkyl group with the carbon content of from 1 to 10, aniline, toluidine, and so forth (vide: Japanese Examined Patent Publication No. 39651/1981, Japanese Unexamined Patent Publication No. 131213/1982, Japanese Unexamined Patent Publication No. 225145/1983).

The copolymer of the component (B) should properly be composed of 90 to 40 mol %, or preferably 80 to 50 mol % of a residual group of an aromatic vinyl compound; and 10 to 60 mol %, or preferably 20 to 50 mol % of a residual group of at least one kind of acrylic compound selected from the group consisting of acrylonitrile, methacrylonitrile, alkyl ester of acrylic acid, and alkyl ester of methacrylic acid. When the content of the residual group of the aromatic vinyl compound exceeds 90 mol %, its chemical-resistant property becomes lowered. On the other hand, when its content does not reach 40 mol %, its compatibility with other resins unfavorably decreases.

For the aromatic vinyl compound, there may be used the same compounds as exemplified in the component (A) above. For the acrylic acid ester or methacrylic acid ester, there may preferably be used esters of acrylic acid (or methacrylic acid) and aliphatic alcohols having the carbon content of from 1 to 10.

The copolymer of the component (B) may be produced by polymerizing each of the above-mentioned monomers through the bulk polymerization method, bulk-suspension polymerization method, suspension polymerization method, emulsion polymerization method, and so forth.

It should, however, be noted that, since the copolymer of the component (B) is by-produced at the time of manufacturing the above-mentioned copolymer of the component (A) or the below-mentioned graft copolymer of the component (C), there is no necessity for its being separately produced for blending.

The graft copolymer of the component (C) should preferably be such that it possesses a number-average particle size of from 0.1 to 2 μm, the graft substrate of which is a rubber having its glass transition point of zero degree C or below, and the graft chain of which consists of 90 to 40 mol % of a residual group of an aromatic vinyl compound, and 10 to 60 mol % of a residual group of at least one kind of acrylic compound selected from the group consisting of acrylonitrile, methacrylonitrile, alkyl ester of acrylic acid, and alkyl ester of methacrylic acid.

For the aromatic vinyl compound to be contained in the component (C), there may be used the same compounds as enumerated in the above-mentioned component (A). For the alkyl esters of acrylic acid and methacrylic acid, there may preferably be used esters of acrylic acid (or methacrylic acid) and aliphatic alcohols having the carbon content of from 1 to 10. A preferred example of the graft copolymer is to use styrene, α-methyl styrene, or p-methyl styrene as the aromatic vinyl compound, and to use acrylonitrile or methacrylonitrile as the acrylic compound.

The rubber to be used as the graft substrate of the graft copolymer of the component (C) should have its glass transition temperature of zero degree centigrade or below. When the glass transition temperature exceeds zero degree C, its rubber elasticity becomes poor with the consequence that the impact absorbing capability unfavourably lowers. The rubber may be either natural rubber of synthetic rubber. As the synthetic rubber, there may be exemplified: cis-1,4-polybutadiene, medium cis-polybutadiene, polybutadiene from emulsion polymerization, styrene-butadiene copolymer, acrylonitrile-butadiene copolymer, polyisoprene, and other diene type rubber; ethylene-propylene bipolymer, ethylene-propylene-non-conjugated diene terpolymer, and other olefin type rubber; n-butylacrylate-acrylonitrile copolymer, ethylacrylate-acrylonitrile copolymer, and other acrylic rubber; and so forth.

The graft copolymer of the component (C) may be produced by polymerizing the above-mentioned aromatic vinyl compound and any of those compounds such as acrylonitrile, etc. in the presence of the above-mentioned rubber. Although there is no particular limitation to the polymerization method, the emulsion polymerization or bulk-suspension polymerization is preferred. The copolymer as obtained by this polymerization method is of a structure such that the graft copolymer of the component (C), wherein the graft chain composed of a copolymer of the aromatic vinyl compound and the compound such as acrylonitrile, etc. is coupled with the above-mentioned graft substrate, is dispersed in the copolymer consisting of the aromatic vinyl compound and the acrylic compound, i.e., the copolymer of the component (B), forming a non-continuous phase. Since the copolymer of the component (C) is insoluble in methylethyl ketone, its composition can be determined by dissolving the resulted copolymer into methylethyl ketone to separate it into an insoluble portion and a soluble portion, thereby isolating the component (C) from the above-mentioned resulted copolymer. Usually, however, the component is not particularly separated for use at the time of its production.

The content of the residual group of the aromatic vinyl compound to be present in the graft chain of the component (C) should properly be in a range of from 90 to 40 mol %, or preferably from 80 to 50 mol % in view of its compatibility with other resins and its chemical-resistant property.

The graft efficiency of this component should preferably be in a range of from 20 to 100% by weight, or more preferably from 30 to 70% by weight. Incidentally, the graft efficiency is expressed in terms of a percentage of weight increase in the copolymer after the graft polymerization with respect to the rubber material used.

Further, the number-average particle size of the component (C) may appropriately be in a range of from 0.1

to 2 μm. More particularly, the graft copolymer of the component (C) showing two-peak distribution of the number-average particle size, one in a range of from 0.2 to 0.5 μm and the other in a range of from 0.6 to 1.5 μm, possesses particularly favorable impact resistant property. When the number-average particle size of the component (C) is below 0.1 μm, its impact resistance lowers. On the other hand, when the number-average particle size thereof exceeds 2 μm, the graft copolymer lowers its rigidity, impact resistance and luster on its surface, which is not favorable.

Examples of the component (C) are as follows: a copolymer wherein styrene and/or α-methyl styrene and acrylonitrile are grafted on polybutadiene as the graft substrate; a copolymer wherein styrene and/or α-methyl styrene and acrylonitrile are grafted on a styrene-butadiene copolymer as the graft substrate; a copolymer wherein styrene and/or α-methyl styrene and acrylonitrile are grafted on acrylic rubber as the graft substrate; a copolymer wherein styrene and/or α-methyl styrene and acrylonitrile are grafted on a terpolymer of ethylene, propylene, and non-conjugated diene as the graft substrate; and so forth.

Appropriate blending ratio of the components (A), (B) and (C) is as follows: 10 to 90% by weight, or preferably 30 to 70% by weight of the component (A); 80 to 2% by weight, or preferably 50 to 20% by weight of the component (B); and 70 to 1% by weight, or preferably 40 to 10% by weight of the component (C).

Outside the above-mentioned blending ratio, heat resistance, impact resistance, shaping property, and other physical properties of the resin composition lose their balance, which is not favorable. Within the range of the above-mentioned blending ratio, when the content of the component (A) increases, the resin composition according to the present invention improves its heat resistant property; when the content of the component (B) increases, it improves the shaping property; and, further, when the content of the component (C) increases, it improves the impact resistant property to be represented by the Izod impact strength.

The copolyether-ester type thermoplastic elastomer to be used in the manufacture of the resin composition according to the present invention is a block copolymer consisting of two kinds of block of aliphatic polyether chain and aromatic polyester chain.

A copolymer obtained by random-copolymerization of monomers constituting the polyether chain and the polyester chain does not provide desirable physical property, hence such copolymer is not favorable for the purpose of the present invention.

The aromatic polyester chain is a polyester consisting of aromatic dicarboxylic acid and alkylene glycol.

- 13 -

As the aromatic dicarboxylic acid, there may be exemplified terephthalic acid, naphthalene-1,4-dicarboxylic acid, naphthalene-1,5-dicarboxylic acid, and so on.

Alkylene glycol to be used for producing the aromatic polyester chain is one, in which hydroxyl group is coupled at both ends of the methylenic chain containing 2 to 10 carbon atoms. Preferred examples of such alkylene glycol are ethylene glycol and 1,4-butanediol. Besides these, 1,5-pentanediol, 1,6-hexanediol, and so forth may also be used.

As the aliphatic polyether, there may be used preferably polyethylene glycol and polybutylene glycol. It may also be feasible to use polyether obtained by use of glycol containing therein 2 to 10 carbon atoms.

The above-mentioned elastomer provides favorable physical properties such as FDI, shaping property, etc. of the resulted resin composition, if the number-average molecular weight of the aromatic polyester chain ranges from 1,000 to 60,000, and the number-average molecular weight of the aliphatic polyether chain ranges from 400 to 6,000.

Further, the above-mentioned elastomer containing therein 30 to 80% by weight of the aliphatic polyether chain and the remainder of the aromatic polyester chain provides favorable compatibility among the components (A), (B) and (C), and the resulted resin composition also possesses favorable FDI and heat resistant property.

Examples of such copolyether-ester type thermoplastic elastomer are: polyethylene terephthalate-polyethylene oxide block copolymer, polyethylene terephthalate-polytetramethylene oxide block copolymer, polytetramethylene terephthalate-polyethylene oxide block copolymer, polytetramethylene terephthalate-polytetramethylene oxide block copolymer, and so forth.

Moreover, the above-mentioned elastomer provides favorable heat resistance on the resulted resin composition, if and when its Vicat softening point is at least $100^{\circ}C$.

In the resin composition according to the present invention, 1 to 20 parts by weight, or preferable 5 to 15 parts by weight of the copolyether-ester type thermoplastic elastomer is blended with 100 parts by weight of the resin composition consisting of the components (A), (B) and (C). When the blending ratio of the copolyether-ester type thermoplastic elastomer is below 1 part by weight, the practical impact strength of the resulted resin composition is not satisfactory. On the other hand, when the blending ratio exceeds 20 parts by weight, the resulted resin composition unfavorably lowers its heat resistance and rigidity.

The resin composition according to the present invention may be produced by melting and kneading each of the above-mentioned components (A), (B), (C), and the copolyether-ester type thermoplastic elastomer by means of a Banbury mixer, an extruder, etc.

In addition, the resin composition according to the present invention may be blended, depending on necessity, with an ultraviolet ray absorbing agent, anti-oxidizing agent, a coloring agent, a fire-retarding agent, a mold-releasing agent, and various other auxiliary agents.

The heat and impact resistant thermoplastic resin composition according to the present invention possesses excellent characteristics to be mentioned in the following, hence its industrial utility is great.

(1) It has excellent impact resistance, particularly, the practical impact strength to be represented by falling weight (dart) impact resistance (FDI).

(2) It has excellent heat resistance and shaping property to be represented by MFR (melt flow rate).

(3) With the above-mentioned excellent properties, therefore, the resin composition of the present invention finds its use as the shaping material for interior finishing parts in automobiles, casings of electrical apparatuses and appliances or office appliances, and various other articles of complicated configurations and required to have both the impact strength and the heat resistance.

With a view to enabling those persons skilled in the art to put the present invention into practice, and to giving them good understanding of the present invention, the following preferred examples of the invention and a few comparative examples are presented.

METHOD FOR MEASURING PHYSICAL PROPERTIES:

The physical properties of the resin composition obtained in the inventive examples and the comparative examples were measured in the following manners.

(1) Vicat softening point was measured in accordance with "JIS K-7206".

(2) Izod impact strength was measured in accordance with "JIS K-7110".

(3) Melt-flow rate (MFR) was measured in accordance with "B method" as defined in "JIS K-7210" under the conditions of 240°C for measuring temperature and 10 kgf for the test load.

(4) Falling dart impact strength (FDI) was measured in such a manner that a test plate of 2.5 mm thick was fixed on a supporting plate having a circular hole of 8 cm in diameter perforated therein in such a way as to closing the circular hole, and then a dart having a semi-spherical tip of 12.5 mm in diameter was dropped toward the center of the above-mentioned circular hole. The impact strength was indicated by a product of the maximum height, at which no cracks occurred in the test plate, and a mass of the dart used.

(5) The number-average particle size of the component (C) was measured in such a way that the resulted resin composition was treated for increasing contrast by deposition of metal osmium on the component (C) by use of osmium tetraoxide, after which it was photographed by a transmission-type electron microscope. From the thus obtained photograph, the particle size of the component (C) was measured for 200 to 1,000 particles of the polymer, and the measured result was indicated by the number-average value.

CONSTITUENT COPOLYMERS:

The constituent copolymers used in each of the inventive examples and the comparative examples were as follows.

Resin I

In accordance with the method as described in the manufacturing example of Japanese Unexamined Patent Publication No. 232138/1984, there was provided a composition consisting of 76% by weight of a copolymer corresponding to the component (A) and composed of 27 mol % of a residual group of N-phenyl maleimide, 4 mol % of a residual group of maleimide, and 69 mol % of a residual group of styrene; and 24% by weight of a copolymer corresponding to the component (B) and composed of 41 mol % of a residual group of acrylonitrile and 59 mol % of a residual group of styrene. This was called "Resin I".

Resin II

There was obtained a copolymer corresponding to the component (A) and composed of 69 mol % of a residual group of styrene and 31 mol % of N-phenyl maleimide, by imidizing with aniline a copolymer obtained from the bulk polymerization method and composed of 69 mol % of a residual group of styrene and 31 mol % of a residual group of maleic anhydride. This was called "Resin II".

Resin III

By the emulsion polymerizaton, there was produced a composition consisting of 70% by weight of a graft copolymer corresponding to the component (C) - the graft copolymer having a number-average particle size of 0.30 µm and a graft chain composed of 54 mol % of a residual group of styrene and 46 mol % of a residual group of acrylonitrile, which was grafted on a styrene-butadiene copolymer consisting of 5.5 mol % of a residual group of styrene and 94.5 mol % of a residual group of butadiene and having a glass transition point of $-30^{\circ}$C, as the graft substrate - and 30% by weight of a copolymer corresponding to the component (B) and composed of 54 mol % of a residual group of styrene and 46 mol % of a residual group of acrylonitrile. This was called "Resin III".

Resin IV

By the emulsion polymerization, there was produced a composition (IV-1) consisting of a copolymer corresponding to the component (C) - the graft copolymer having a number-average particle size of 0.30 µm and a graft chain composed of 54 mol % of a residual group of styrene and 46 mol % of a residual group of acrylonitrile, which was grafted on a styrene-butadiene copolymer composed of 5.5 mol % of a residual group of styrene and 94.5 mol % of a residual group of butadiane and having a glass transition point of -30$^{\circ}$C, as the graft substrate - and a copolymer corresponding to the component (B) and composed of 54 mol % of a residual group of styrene and 46 mol % of a residual group of acrylonitrile.

On the other hand, by the bulk-suspension polymerization, there was produced a composition (IV-2) consisting of a copolymer corresponding to the component (C) - the graft copolymer having a number-average particle size of 2.0 µm and the graft chain composed of 54 mol % of a residual group of styrene and 46 mol % of a residual group of acrylonitrile, which was grafted on polybutadiene having a glass transition point of -90$^{\circ}$C, as the graft substrate - and a copolymer corresponding to the component (B) and composed of 54 mol % of a residual group of styrene and 46 mol % of a residual group of acrylonitrile.

67 parts by weight of the composition (IV-1) and 33 parts by weight of the composition (IV-2) were mixed and kneaded by use of a Banbury mixer. The thus obtained resin composition was called "Resin IV".

The resin IV contained in it 45.8% by weight of the copolymer corresponding to the component (C) and 54.2% by weight of the copolymer corresponding to the component (B). The copolymer corresponding to the component (C) indicated that it had two peaks at the respective portions of 0.28 μm and 1.8 μm, and its number-average particle diameter was 0.9 μm in general.

Resin V

"HYTREL® 4056" (a tradename for a product of Du Pont de Nemour & Co., U.S.A.) was used as the copolyether-ester type thermoplastic elastomer. This was called "Resin V".

The resin V contained therein 42% by weight of polybutylene terephthalate as the aromatic polyester chain, and 58% by weight of polytetramethylene ether as the aliphatic polyether chain. It had a hardness (Shore D Hardness) of 40, a melting point of 156°C, a Vicat softening point of 112°C, and a modulus of bending of 48 MPa.

EXAMPLES 1 to 8 and COMPARATIVE EXAMPLES 1 to 9

Each of the above-mentioned resins was blended at a blending ratio as shown in Table 1 below, and then kneaded by an extruder.

The contents and the physical properties of the copolymers corresponding to the components (A), (B) and (C) in the resulted resin composition are as shown in Table 1 below.

As is apparent from Table 1, the resin composition according to the present invention possesses favorable heat resistance and melt-flow rate (MFR), and also it had excellent falling dart impact resistance (FDI), hence the resin composition is suitable as the shaping material for the interior finishing parts of automobiles, the casings of electrical apparatuses and appliances, and so on.

Table 1

| | | Ex. 1 | Ex. 2 | Ex. 3 | Com. Ex. 1 | Com. Ex. 2 | Com. Ex. 3 | Ex. 4 | Ex. 5 | Ex. 6 | Ex. 7 | Com. Ex. 4 | Com. Ex. 5 | Com. Ex. 6 | Com. Ex. 7 | Ex. 8 | Com. Ex. 8 | Com. Ex. 9 |
|---|---|---|---|---|---|---|---|---|---|---|---|---|---|---|---|---|---|---|
| Blending (part by weight) | Resin I | 70 | 70 | 70 | 70 | 70 | 70 | 58 | 58 | 58 | 58 | 58 | 58 | 58 | 42 | – | – | – |
| | Resin II | – | – | – | – | – | – | – | – | – | – | – | – | – | – | 58 | 100 | – |
| | Resin III | 30 | 30 | 30 | 30 | 30 | 30 | – | – | – | – | – | – | – | – | – | – | – |
| | Resin IV | – | – | – | – | – | – | 42 | 42 | 42 | 42 | 42 | 42 | 42 | 58 | 42 | – | 100 |
| | Resin V | 5 | 10 | 10 | – | 0.5 | 25 | 1 | 5 | 10 | 20 | – | 0.5 | 30 | 20 | 20 | 20 | 20 |
| Composition (part by weight) | Component (A) | 53 | 53 | 53 | 53 | 53 | 53 | 44 | 44 | 44 | 44 | 44 | 44 | 44 | 32 | 58 | 100 | 0 |
| | Component (B) | 26 | 26 | 26 | 26 | 26 | 26 | 37 | 37 | 37 | 37 | 37 | 37 | 37 | 41 | 23 | 0 | 54 |
| | Component (C) | 21 | 21 | 21 | 21 | 21 | 21 | 19 | 17 | 19 | 19 | 19 | 19 | 19 | 27 | 19 | 0 | 46 |
| | (Note 1) | 5 | 10 | 20 | 0 | 0.5 | 25 | 1 | 5 | 10 | 20 | 0 | 0.5 | 30 | 20 | 20 | 20 | 20 |
| Physical properties | Vicat Sof. Pt. ($^0$C) | 126 | 124 | 117 | 127 | 127 | 114 | 120 | 119 | 117 | 114 | 120 | 120 | 108 | 114 | 134 | 135 | 101 |
| | Izod Impact Strength (Note 2) | 15 | 17 | 22 | 12 | 12 | 22 | 13 | 16 | 18 | 20 | 12 | 12 | 22 | 17 | 14 | 3 | 50 |
| | FDI (kg. cm) | 110 | 130 | 170 | 70 | 75 | 200 | 95 | 130 | 280 | 340 | 80 | 85 | 350 | 180 | 120 | <20 | (Note 3) |
| | MFR (g/10 min.) | 5 | 6 | 10 | 4 | 4 | 12 | 9 | 10 | 11 | 16 | 8 | 8 | 25 | 7 | 6 | 4 | 4 |

Note 1: coeter-ester type thermoplastic elastomer
Note 2: (kg. cm/cm with notch)
Note 3: no fracture occurred under the measurement conditions upto 500 kg.cm

CLAIMS:

1. A thermoplastic resin composition having heat resistant and impact resistant properties, characterized in that it is a blend of 100 parts by weight of a composition consisting of 10 to 90% by weight of the below-mentioned component (A), 80 to 2% by weight of the below-mentioned component (B), and 70 to 1% by weight of the below-mentioned component (C); and 1 to 20 parts by weight of a copolyether-ester type thermoplastic elastomer:

(A)   a copolymer consisting of 90 to 50 mol % of a residual group of aromatic vinyl compound, 10 to 50 mol % of a residual group of maleimide compound, and 0 to 30 mol % of a residual group of a vinyl compound copolymerizable with said two compounds;

(B)   a copolymer consisting of 90 to 40 mol % of a residual group of aromatic vinyl compound, and 10 to 60 mol % of a residual group of at least one kind of acrylic compound selected from the group consisting of acrylonitrile, methacrylonitrile, alkyl ester of acrylic acid, and alkyl ester of methacrylic acid; and

(C)   a graft copolymer having a number-average particle size of from 0.1 to 2 μm, the graft substrate of which is a rubber having a glass transition point of zero degree C or below, and the graft chain of which consists of 90 to 40 mol % of a residual group of aromatic vinyl compound and 10 to 60 mol % of a residual group of at least one kind of acrylic compound selected from the group consisting of acrylonitrile, methacrylonitrile, alkyl ester of acrylic acid, and alkyl ester of methacrylic acid.

2. A resin composition according to Claim 1, characterized in that said thermoplastic elastomer contains 30 to 80% by weight of an aliphatic polyether chain and 70 to 20% by weight of an aromatic polyester chain, and has a Vicat softening point of at least $100^{\circ}$C.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | GB-A-2 141 432 (MITSUBISHI MONSANTO) <br> * Claims * | 1-2 | C 08 L 35/06 <br> C 08 L 25/08 <br> C 08 L 51/04 |
| A | EP-A-0 108 738 (MONSANTO) <br> * Claims * | 1-2 | |

TECHNICAL FIELDS
SEARCHED (Int Cl 4)

C 08 L 35/06
C 08 L 51/04
C 08 L 25/08

The present search report has been drawn up for all claims

| Place of search | Date of completion of the search | Examiner |
|---|---|---|
| THE HAGUE | 25-08-1986 | FOUQUIER J.P. |